# EUROPÄISCHE PATENTANMELDUNG

(11) **EP 3 919 216 A1**
(43) Veröffentlichungstag der Anmeldung: **08.12.2021**
(21) Anmeldenummer: 21176691.0
(22) Anmeldetag: 28.05.2021
(51) Int. Cl.: B23K 20/10, B65B 61/18

(54) **SCHWEISSVORRICHTUNG UND VERFAHREN ZUM SCHWEISSEN EINES AUSLASSELEMENTS AN EIN VERPACKUNGSMATERIAL**

(30) Priorität: 05.06.2020 DE 102020115029
(71) Anmelder: Syntegon Technology GmbH, 71332 Waiblingen (DE)
(72) Erfinder: Pöll, Holger, 71332 Waiblingen (DE); Weritz, Marco, 71332 Waiblingen (DE)
(74) Vertreter: Daub, Thomas

(57) **Zusammenfassung**

Die Erfindung geht aus von einer Schweißvorrichtung (10a; 10b) zum Schweißen eines Auslasselements (12a; 12b), insbesondere eines Ventils, an ein Verpackungsmaterial (14a; 14b), mit zumindest einem, insbesondere freitragenden, Amboss (16a; 16b), der zumindest einen Aufnahmebereich (18a; 18b) zur Aufnahme des zu schweißenden Auslasselements (12a; 12b) umfasst, und mit zumindest einem Schweißstempel (20a; 20b), insbesondere einer Sonotrode, der zu einem Schweißen des Auslasselements (12a; 12b) an das Verpackungsmaterial (14a; 14b) dazu eingerichtet ist, mit dem Amboss (16a; 16b) zusammenzuwirken.

Es wird vorgeschlagen, dass die Schweißvorrichtung (10a; 10b) zumindest eine Magneteinheit (22a; 22b) umfasst, die dazu eingerichtet ist, den Amboss (16a; 16b) zumindest temporär in einer Schweißposition, in der der Schweißstempel (20a; 20b) dazu eingerichtet ist, das Auslasselement (12a; 12b) an das Verpackungsmaterial (14a; 14b) zu schweißen, zu halten.

## Beschreibung

### Stand der Technik

Es ist bereits eine Schweißvorrichtung zum Schweißen eines Auslasselements an ein Verpackungsmaterial, mit zumindest einem Amboss, der zumindest einen Aufnahmebereich zur Aufnahme des zu schweißenden Auslasselements umfasst, und mit zumindest einem Schweißstempel, der zu einem Schweißen des Auslasselements an das Verpackungsmaterial dazu eingerichtet ist, mit dem Amboss zusammenzuwirken, vorgeschlagen worden.

### Offenbarung der Erfindung

Die Erfindung geht aus von einer Schweißvorrichtung zum Schweißen eines Auslasselements, insbesondere eines Ventils, an ein Verpackungsmaterial, mit zumindest einem, insbesondere freitragenden, Amboss, der zumindest einen Aufnahmebereich zur Aufnahme des zu schweißenden Auslasselements umfasst, und mit zumindest einem Schweißstempel, insbesondere einer Sonotrode, der zu einem Schweißen des Auslasselements an das Verpackungsmaterial dazu eingerichtet ist, mit dem Amboss zusammenzuwirken.

Es wird vorgeschlagen, dass die Schweißvorrichtung zumindest eine Magneteinheit umfasst, die dazu eingerichtet ist, den Amboss zumindest temporär in einer Schweißposition, in der der Schweißstempel dazu eingerichtet ist, das Auslasselement an das Verpackungsmaterial zu schweißen, zu halten.

Bevorzugt ist die Magneteinheit dazu vorgesehen, den Amboss zumindest während eines Schweißvorgangs in der Schweißposition zu halten. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt. Bevorzugt weist die Magneteinheit zumindest ein Fixiermagnetelement, besonders bevorzugt zumindest zwei Fixiermagnetelemente, auf. Das Fixiermagnetelement ist zumindest dazu vorgesehen, den Amboss zumindest während des Schweißvorgangs in der Schweißposition zu halten. Vorzugsweise wirkt die Magneteinheit, insbesondere das zumindest eine Fixiermagnetelement, mit dem Amboss zusammen, um den Amboss mit einer Haltekraft zu beaufschlagen. Es ist denkbar, dass eine mittels der Magneteinheit erzeugte Haltekraft auf den Amboss einstellbar ist. Es ist denkbar, dass die Magneteinheit derart einstellbar ist, dass der Amboss in zumindest einem Betriebszustand frei von einer Haltekraft durch die Magneteinheit ist. Bevorzugt ist die Magneteinheit derart relativ zu dem Amboss angeordnet, dass das Verpackungsmaterial zwischen der Magneteinheit, insbesondere zumindest zwischen dem Fixiermagnetelement, und dem Amboss anordenbar ist. Vorzugsweise ist zwischen der Magneteinheit, insbesondere zumindest zwischen dem Fixiermagnetelement, und dem Amboss, insbesondere zumindest in einem haltefreien Zustand des Ambosses, ein Spalt gebildet. In dem haltefreien Zustand des Ambosses ist der Amboss frei von einer mittels der Magneteinheit auf den Amboss ausübbaren Haltekraft. Das Verpackungsmaterial ist bevorzugt zwischen der Magneteinheit, insbesondere zumindest zwischen dem Fixiermagnetelement, und dem Amboss in zumindest einem Betriebszustand bewegbar, vorzugsweise zumindest in einem haltefreien Zustand des Ambosses. Der Amboss und die Magneteinheit, insbesondere zumindest das Fixiermagnetelement, sind vorzugsweise derart relativ zueinander anordenbar, dass der Amboss und die Magneteinheit, insbesondere zumindest das Fixiermagnetelement, zueinander beabstandet sind. Bevorzugt ist das Verpackungsmaterial dazu vorgesehen, zumindest zwischen zwei aufeinanderfolgenden Schweißvorgängen zwischen dem Amboss und der Magneteinheit, insbesondere zumindest dem Fixiermagnetelement, bewegt zu werden, insbesondere mittels einer Materialführungsbahn der Schweißvorrichtung. Das Verpackungsmaterial ist insbesondere zumindest während des Schweißvorgangs zwischen der Magneteinheit, bevorzugt zumindest dem Fixiermagnetelement, und dem Amboss eingeklemmt. Insbesondere befindet sich das Verpackungsmaterial zumindest während des Schweißvorgangs zwischen dem Amboss und dem Schweißstempel sowie zwischen dem Amboss und dem Fixiermagnetelement.

Der Schweißstempel ist vorzugsweise dazu eingerichtet, das Auslasselement an das Verpackungsmaterial zu schweißen, wenn der Schweißstempel und der Amboss in der Schweißposition angeordnet sind. Insbesondere ist der Schweißstempel dazu eingerichtet, das Auslasselement auf einer dem Schweißstempel zugewandten Seite des Verpackungsmaterials oder auf einer dem Schweißstempel abgewandten Seite des Verpackungsmaterials an das Verpackungsmaterial zu schweißen. Die Schweißposition ist insbesondere durch eine relative Anordnung, vorzugsweise durch einen relativen Abstand, des Ambosses zu dem Schweißstempel definiert, die ein Schweißen des Auslasselements an das Verpackungsmaterial ermöglicht. Die Schweißvorrichtung ist bevorzugt als eine Ultraschallschweißvorrichtung ausgebildet. Vorzugsweise ist der Schweißstempel als Sonotrode ausgebildet. Es ist jedoch auch denkbar, dass die Schweißvorrichtung als eine Wärmekontaktschweißvorrichtung, insbesondere mit einem Heizstempel, eine Induktionsschweißvorrichtung, eine Impulsschweißvorrichtung, eine Zirkularschweißvorrichtung, eine Laserdurchstrahlschweißvorrichtung oder dergleichen ausgebildet ist. Das Auslasselement ist vorzugsweise zumindest dazu vorgesehen, ein Fluid zumindest entlang einer Auslassrichtung passieren zu lassen. Das Auslasselement kann beispielsweise als Ventil, insbesondere als Aromaschutzventil, als Auslassöffnung, als Verschluss oder dergleichen ausgebildet sein. Das Verpackungsmaterial ist vorzugsweise zumindest dazu vorgesehen, zu Beutelpackungen oder ähnlichen Verpackungen, insbesondere mittels einer Verpackungsmaschine, verarbeitet zu werden. Die Verpackungsmaschine umfasst besonders bevorzugt zumindest die Schweißvorrichtung. Das Verpackungsmaterial bildet insbesondere eine flache Packstoffbahn. Das Verpackungsmaterial liegt insbesondere vor dem Schweißvorgang durch die Schweißvorrichtung zumindest einfach gefaltet vor. Das Verpackungsmaterial ist vorzugsweise zumindest dazu vorgesehen, zumindest vor dem Schweißvorgang durch die Schweißvorrichtung zumindest teilweise um einen Öffnungswinkel aufgefaltet zu werden. Der Öffnungswinkel ist vorzugsweise zumindest kleiner als 25°, bevorzugt zumindest kleiner als 15° und besonders bevorzugt zumindest kleiner als 10°. Unter einem "freitragenden" Element soll insbesondere ein Element verstanden werden, das nur an einer Seite eingespannt, fixiert, befestigt oder dergleichen ist. Vorzugsweise ist der Amboss zumindest in einem Bereich des Aufnahmebereichs frei von einer festen Stütze oder einer Verbindungs- oder Lagerstelle ausgebildet. Bevorzugt weist der Amboss ein freies Ende und ein befestigtes oder eingespanntes Ende auf. Der Amboss kann beispielsweise als eine Halteschiene, als Haltearm oder dergleichen ausgebildet sein.

Die Schweißvorrichtung umfasst bevorzugt zumindest die Materialführungsbahn, die zumindest dazu eingerichtet ist, dem Schweißstempel und dem Amboss das Verpackungsmaterial zuzuführen und das Verpackungsmaterial nach dem Schweißvorgang von dem Schweißstempel und dem Amboss abzuführen. Eine Materialführungsachse der Materialführungsbahn verläuft insbesondere zumindest im Wesentlichen senkrecht zu einer Zuführungsrichtung einer Auslasselementzuführungseinheit. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Das Verpackungsmaterial weist vorzugsweise eine Verpackungsmaterialbewegungsachse auf, entlang derer das Verpackungsmaterial bewegbar ist. Die Verpackungsmaterialbewegungsachse verläuft bevorzugt zumindest im Wesentlichen parallel zu der Materialführungsachse der Materialführungsbahn. Die Materialführungsbahn kann beispielsweise zumindest teilweise von dem Amboss gebildet sein oder separat zu dem Amboss ausgebildet sein.

Die Schweißvorrichtung umfasst vorzugsweise zumindest die genannte Auslasselementzuführungseinheit, die zumindest dazu eingerichtet ist, dem Aufnahmebereich des Ambosses zumindest das Auslasselement zuzuführen. Der Aufnahmebereich ist vorzugsweise an einer Ambossoberseite des Ambosses angeordnet. Die Ambossoberseite ist bevorzugt an einer dem Schweißstempel zugewandten Seite des Ambosses an dem Amboss angeordnet. Die Ambossoberseite ist bevorzugt an einer der Stützeinheit abgewandten Seite des Ambosses am Amboss angeordnet. Der Aufnahmebereich ist insbesondere von der Ambossoberseite des Ambosses gebildet. Der mittels der Ambossoberseite gebildete Aufnahmebereich ist besonders bevorzugt passgenau zu dem Auslasselement ausgebildet. Insbesondere ist die Auslasselementzuführungseinheit zumindest in einem Betriebszustand auf einer dem Schweißstempel zugewandten Seite des Verpackungsmaterials oder auf einer dem Schweißstempel abgewandten Seite des Verpackungsmaterials angeordnet. Die Auslasselementzuführungseinheit ist vorzugsweise an dem Amboss angeordnet, besonders bevorzugt in den Amboss integriert. Die Auslasselementzuführungseinheit weist bevorzugt zumindest ein Führungselement auf, wobei das Auslasselement dazu vorgesehen ist, bei einer Zuführung in den Aufnahmebereich des Ambosses entlang des Führungselements geführt zu werden. Vorzugsweise ist das Führungselement dazu vorgesehen, eine Vielzahl von Auslasselementen zu führen. Die Auslasselemente der Vielzahl von Auslasselementen sind insbesondere zueinander lose in einer Reihe hintereinander anordenbar, bevorzugt auf dem Führungselement anordenbar, oder bilden eine zusammenhängende Bahn von Auslasselementen. Bevorzugt ist das Führungselement als eine Führungsschiene oder dergleichen ausgebildet. Es ist denkbar, dass das Führungselement einstückig mit dem Amboss ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es ist auch denkbar, dass die Auslasselementzuführungseinheit, insbesondere das Führungselement, separat von dem Amboss ausgebildet und/oder angeordnet ist. Die Zuführungsrichtung der Auslasselementzuführungseinheit verläuft vorzugsweise zumindest teilweise parallel zu einer Haupterstreckungsachse des Ambosses. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt. Vorteilhaft kann eine kompakte Schweißvorrichtung bereitgestellt werden. Vorteilhaft kann eine Verwendung eines besonders flachen Ambosses realisiert werden. Vorteilhaft kann eine besonders komplikationsfreie Verarbeitung des Verpackungsmaterials, insbesondere nach dem Schweißvorgang, ermöglicht werden. Vorteilhaft kann der Öffnungswinkel bei einer Auffaltung des Verpackungsmaterials vor einem Schweißvorgang klein gehalten werden. Vorteilhaft kann ein besonders präziser Schweißvorgang ermöglicht werden.

Weiter wird vorgeschlagen, dass der Amboss zumindest teilweise aus einem magnetischen Material gebildet ist und/oder dass die Magneteinheit zumindest ein Magnetelement aufweist, das an dem Amboss fixiert ist. Es ist denkbar, dass der Amboss zumindest in einem Bereich des Ambosses, in dem der Amboss dazu vorgesehen ist, mit der Magneteinheit zusammenzuwirken, zumindest teilweise aus einem magnetischen Material gebildet ist. Es ist auch denkbar, dass in dem Bereich des Ambosses, in dem der Amboss dazu vorgesehen ist, mit der Magneteinheit zusammenzuwirken, ein Magnetelement der Magneteinheit angeordnet ist. Das Magnetelement kann beispielsweise als ein Permanentmagnet oder als ein Bauteil aus einem magnetischen Material ausgebildet sein. Es kann vorteilhaft konstruktiv einfach eine besonders platzsparende Schweißvorrichtung bereitgestellt werden.

Außerdem wird vorgeschlagen, dass die Magneteinheit zumindest ein Fixiermagnetelement umfasst, wobei der Amboss und das Fixiermagnetelement relativ zueinander bewegbar sind. Der Amboss weist vorzugsweise eine Ambossbewegungsachse auf, entlang derer und/oder um die der Amboss bewegbar ist. Die Ambossbewegungsachse verläuft bevorzugt zumindest im Wesentlichen senkrecht zu der Haupterstreckungsachse des Ambosses, zu der Zuführungsrichtung der Auslasselementzuführungseinheit und/oder zu der Materialführungsachse der Materialführungsbahn. Vorzugsweise ist der Amboss dazu vorgesehen, durch eine Biegung des Ambosses bewegt zu werden. Die Magneteinheit ist insbesondere dazu vorgesehen, eine Bewegung des Ambosses, vorzugsweise eine Biegung des Ambosses, zu erzeugen. Der Amboss weist vorzugsweise zumindest eine Ausnehmung auf, die dazu vorgesehen ist, eine Biegung des Ambosses an einer bevorzugten Biegestelle zu erzeugen. Die Ausnehmung kann beispielsweise als ein Langloch ausgebildet sein. Eine Haupterstreckungsachse des Langlochs verläuft vorzugsweise zumindest im Wesentlichen parallel zu der Haupterstreckungsachse des Ambosses. Es ist alternativ auch denkbar, dass der Amboss ausnehmungsfrei ausgebildet ist oder eine Vielzahl von Ausnehmungen aufweist, wobei die Ausnehmungen der Vielzahl von Ausnehmungen beispielsweise entlang der Haupterstreckungsachse des Ambosses ausgebildet sind. Die Biegestelle befindet sich besonders bevorzugt auf einer Seite des Ambosses, die dem freien Ende des Ambosses abgewandt ist. Es ist jedoch auch denkbar, dass sich die Biegestelle auf einer Seite des Ambosses befindet, an der das freie Ende des Ambosses angeordnet ist. Bevorzugt verläuft eine Haupterstreckungsachse des Ambosses zumindest in der Schweißposition parallel zu einer Schweißfläche des Schweißstempels. Alternativ ist auch denkbar, dass der Amboss beweglich an einem Gehäuseelement der Schweißvorrichtung gelagert ist und/oder mehrteilig ausgebildet ist. Der Amboss kann beispielweise mittels eines linearen Walzkörperlagers, eines linearen Gleitlagers oder dergleichen an dem Gehäuseelement gelagert sein und/oder Teile des mehrteiligen Ambosses können relativ zueinander beweglich gelagert sein. Es ist denkbar, dass der Amboss entlang der und/oder um die Ambossbewegungsachse des Ambosses beweglich gelagert ist. Vorzugsweise ist der Amboss dazu vorgesehen, vor dem Schweißvorgang in die Schweißposition bewegt zu werden. Vorzugsweise ist die Magneteinheit dazu vorgesehen, den Amboss in eine Richtung des Schweißstempels und/oder des Fixiermagnetelements zu bewegen. Bevorzugt ist die Magneteinheit dazu eingerichtet, den Amboss in die Schweißposition zu bewegen. Der Amboss ist insbesondere zu vorgesehen, sich nach dem Schweißvorgang in eine Auslasselementzuführungsposition, vorzugsweise betrachtet relativ zu der Magneteinheit, zu bewegen. Insbesondere ist der Amboss in der Schweißposition mit einer Rückstellkraft beaufschlagt, die in eine Richtung der Auslasselementzuführungsposition des Ambosses gerichtet ist. Die Rückstellkraft ist bevorzugt dazu vorgesehen, den Amboss in die Auslasselementzuführungsposition, insbesondere nach dem Schweißvorgang, zu bewegen. Vorzugsweise ist durch eine Bewegung, bevorzugt eine Biegung des Ambosses, aus der Auslasselementzuführungsposition heraus die Rückstellkraft erzeugbar. Es ist alternativ denkbar, dass der Amboss eine Bewegungseinheit umfasst, die dazu eingerichtet ist, den Amboss in die Auslasselementzuführungsposition zu bewegen. Die Bewegungseinheit kann beispielsweise pneumatisch, elektrisch, mechanisch oder dergleichen ausgebildet sein. Es ist denkbar, dass die Bewegungseinheit zumindest ein Federelement oder dergleichen umfasst, das zu einer Rückstellung des Ambosses in die Auslasselementzuführungsposition vorgesehen ist. Das Federelement kann beispielsweise als eine Spiralfeder, als eine Blattfeder oder dergleichen ausgebildet sein. Die Auslasselementzuführungseinheit ist dazu eingerichtet, dem Aufnahmebereich des Ambosses in der Auslasselementzuführungsposition des Ambosses das Auslasselement zuzuführen. Es kann vorteilhaft ein präziser Schweißvorgang bei gleichzeitig kompakter Bauweise des Ambosses gewährleistet werden.

Ferner wird vorgeschlagen, dass die Magneteinheit zumindest ein, insbesondere das zuvor bereits genannte, Fixiermagnetelement umfasst, wobei der Schweißstempel und das Fixiermagnetelement zueinander bewegbar sind. Vorzugsweise ist der Amboss während des Schweißvorgangs zu dem Fixiermagnetelement positionsfest angeordnet. Der Schweißstempel ist bevorzugt dazu eingerichtet, zu einem Schweißen des Auslasselements an das Verpackungsmaterial bewegt zu werden. Der Schweißstempel weist bevorzugt zumindest eine Schweißstempelbewegungsachse auf, entlang derer der Schweißstempel bewegbar ist. Die Schweißstempelbewegungsachse verläuft zumindest im Wesentlichen senkrecht zu der Haupterstreckungsachse des Ambosses, zu der Zuführungsrichtung der Auslasselementzuführungseinheit und/oder der Materialführungsachse der Materialführungsbahn. Die Schweißstempelbewegungsachse verläuft bevorzugt zumindest im Wesentlichen parallel zu der Ambossbewegungsachse des Ambosses. Der Schweißstempel bewegt sich vorzugsweise zu einem Schweißen des Auslasselements an das Verpackungsmaterial in Richtung des Auslasselements und/oder des Verpackungsmaterials. Es ist denkbar, dass sich die relative Anordnung des Ambosses zu dem Schweißstempel, insbesondere ein Abstand des Ambosses zu dem Schweißstempel, während des Schweißvorgangs ändert, vorzugsweise aufgrund eines Abschmelzens einer Siegelfläche des Auslasselements. Besonders bevorzugt ist der Schweißstempel dazu eingerichtet, die relative Anordnung zu dem Amboss dem Abschmelzen der Siegelfläche des Auslasselements während des Schweißvorgangs anzupassen. Es kann vorteilhaft ein präziser Schweißvorgang bei gleichzeitig kompakter Bauweise des Ambosses gewährleistet werden.

Des Weiteren wird vorgeschlagen, dass die Magneteinheit zumindest ein, insbesondere das zuvor bereits genannte, Fixiermagnetelement umfasst, das als Elektromagnet ausgebildet ist. Vorzugsweise weist die Schweißvorrichtung zumindest eine Spannungsquelle auf, die dazu vorgesehen ist, die Magneteinheit mit elektrischer Energie zu versorgen. Bevorzugt ist eine Haltekraft des Fixiermagnetelements über die Spannungsquelle regelbar. Besonders bevorzugt ist eine Haltekraft des Fixiermagnetelements mittels einer Stromstärke regelbar. Das Fixiermagnetelement ist insbesondere derart einstellbar, dass das Fixiermagnetelement keine Haltekraft auf den Amboss ausübt. Es kann vorteilhaft besonders einfach und komfortabel eine Haltekraft des Ambosses eingestellt werden.

Außerdem wird vorgeschlagen, dass die Schweißvorrichtung zumindest eine Stanzeinheit umfasst, die zumindest dazu vorgesehen ist, eine, insbesondere die zuvor bereits genannte, zusammenhängende Bahn von Auslasselementen zu durchtrennen, wobei die Stanzeinheit zumindest mittels der Magneteinheit betätigbar ist. Die Stanzeinheit ist insbesondere mittels einer Bewegung des Ambosses betätigbar. Besonders bevorzugt ist die Stanzeinheit mittels einer durch die Magneteinheit erzeugten Bewegung des Ambosses betätigbar. Vorzugsweise ist der Amboss, insbesondere in zumindest einem Ausführungsbeispiel, zumindest zweiteilig ausgebildet. Ein erster Teil des Ambosses und ein zweiter Teil des Ambosses sind bevorzugt relativ zueinander bewegbar. Insbesondere sind der erste Teil des Ambosses und der zweite Teil des Ambosses relativ zueinander entlang der Ambossbewegungsachse bewegbar. Besonders bevorzugt ist die Stanzeinheit zumindest mittels einer Bewegung des ersten Teils des Ambosses und des zweiten Teils des Ambosses relativ zueinander betätigbar. Der erste Teil des Ambosses kann beispielsweise mittels eines linearen Walzkörperlagers, eines linearen Gleitlagers oder dergleichen an dem zweiten Teil des Ambosses gelagert sein. Vorzugsweise sind der erste Teil des Ambosses und der zweite Teil des Ambosses an dem Gehäuseelement der Schweißvorrichtung befestigt. Bevorzugt ist die Auslasselementzuführungseinheit, insbesondere das Führungselement, an dem zweiten Teil des Ambosses angeordnet. Es ist auch denkbar, dass der zweite Teil und/oder der erste Teil des Ambosses an dem Gehäuseelement der Schweißvorrichtung beweglich gelagert sind/ist. Der Aufnahmebereich des Ambosses ist vorzugsweise an dem ersten Teil des Ambosses angeordnet, wobei der erste Teil des Ambosses das freie Ende des Ambosses umfasst. Vorzugsweise umfasst die Stanzeinheit zumindest ein Stanzwerkzeug, welches bevorzugt an dem Amboss, insbesondere an dem ersten Teil des Ambosses oder an dem zweiten Teil des Ambosses, angeordnet ist. Es ist denkbar, dass das Stanzwerkzeug zwischen dem ersten Teil des Ambosses und dem zweiten Teil des Ambosses angeordnet ist. Insbesondere bildet eine Kante des Ambosses, die an dem ersten Teil des Ambosses bzw. an dem zweiten Teil des Ambosses angeordnet ist, eine Stanzkante für das Stanzwerkzeug. Das Stanzwerkzeug ist insbesondere dazu vorgesehen, die zusammenhängende Bahn von Auslasselementen, bevorzugt in einzelne Auslasselemente, zu teilen. Das Stanzwerkzeug ist insbesondere dazu vorgesehen, die zusammenhängende Bahn von Auslasselementen bei einer Bewegung des Ambosses, die besonders bevorzugt mittels der Magneteinheit erzeugbar ist, zu durchtrennen. Vorzugsweise ist das Stanzwerkzeug dazu vorgesehen, die zusammenhängende Bahn von Auslasselementen mittels einer Relativbewegung des ersten Teils des Ambosses zu dem zweiten Teil des Ambosses zu durchtrennen. Das Stanzwerkzeug ist vorzugsweise als Stanzmesser oder Stanzkante ausgebildet. Es ist jedoch denkbar, dass das Stanzwerkzeug als ein anderes, dem Fachmann bekanntes Stanzwerkzeug ausgebildet ist. Die Bewegung des ersten Teils des Ambosses relativ zu dem zweiten Teil des Ambosses ist bevorzugt mittels der Magneteinheit erzeugbar. Es ist denkbar, dass ein mittels der Magneteinheit erzeugbarer maximaler Hubweg des ersten Teils des Ambosses verschieden ist von einem mittels der Magneteinheit erzeugbaren maximalen Hubweg des zweiten Teils des Ambosses. Es ist auch denkbar, dass die Magneteinheit nur eine Bewegung des ersten Teils oder des zweiten Teils des Ambosses erzeugt. Vorteilhaft kann eine kompakte Schweißvorrichtung bereitgestellt werden, die eine hohe Funktionalität aufweist. Es kann vorteilhaft eine Schweißvorrichtung mit einer Stanzeinheit ausgestattet werden, ohne den Platzbedarf der Schweißvorrichtung wesentlich zu erhöhen.

Ferner wird vorgeschlagen, dass die Schweißvorrichtung zumindest eine, insbesondere die zuvor bereits genannte, Stanzeinheit umfasst, die zumindest dazu vorgesehen ist, eine Perforation in das Verpackungsmaterial einzubringen, wobei die Stanzeinheit zumindest teilweise an dem Schweißstempel angeordnet ist. Bevorzugt ist die Stanzeinheit zumindest teilweise innerhalb des Schweißstempels angeordnet. Vorzugsweise weist der Schweißstempel zumindest eine Ausnehmung auf, in der die Stanzeinheit, insbesondere zumindest ein weiteres Stanzwerkzeug der Stanzeinheit, anordenbar ist. Es ist alternativ auch denkbar, dass die Stanzeinheit zumindest teilweise an einer Außenseite des Schweißstempels angeordnet ist. Insbesondere umfasst die Stanzeinheit zumindest das weitere Stanzwerkzeug. Das weitere Stanzwerkzeug ist besonders bevorzugt als Lochstanzwerkzeug ausgebildet. Es ist jedoch auch denkbar, dass das weitere Stanzwerkzeug als ein anderes, dem Fachmann bekanntes, Stanzwerkzeug ausgebildet ist. Das weitere Stanzwerkzeug ist bevorzugt beweglich an dem Schweißstempel gelagert. Das weitere Stanzwerkzeug weist vorzugsweise eine Stanzwerkzeugbewegungsachse auf, entlang derer das weitere Stanzwerkzeug bewegbar ist. Die Stanzwerkzeugbewegungsachse des weiteren Stanzwerkzeugs verläuft vorzugsweise zumindest im Wesentlichen parallel zu der Ambossbewegungsachse des Ambosses. Die Stanzwerkzeugbewegungsachse des weiteren Stanzwerkzeugs verläuft bevorzugt zumindest im Wesentlichen senkrecht zu der Haupterstreckungsachse des Ambosses, zu der Zuführungsrichtung der Auslasselementzuführungseinheit und/oder der Materialführungsachse der Materialführungsbahn. Die Stanzeinheit ist insbesondere dazu eingerichtet, mittels des weiteren Stanzwerkzeugs die Perforation in das Verpackungsmaterial einzubringen. Zum Einbringen der Perforation in das Verpackungsmaterial ist die Stanzeinheit vorzugsweise dazu eingerichtet, das weitere Stanzwerkzeug relativ zu dem Verpackungsmaterial zu bewegen, insbesondere in eine Richtung des Verpackungsmaterials zu bewegen. Vorteilhaft kann eine kompakte Schweißvorrichtung bereitgestellt werden, die eine hohe Funktionalität aufweist. Es kann vorteilhaft eine Schweißvorrichtung mit einer Stanzeinheit ausgestattet werden, ohne den Platzbedarf der Schweißvorrichtung wesentlich zu vergrößern.

Die Erfindung geht ferner von einem Verfahren zum Schweißen des Auslasselements an das Verpackungsmaterial mittels der erfindungsgemäßen Schweißvorrichtung aus. Es wird vorgeschlagen, dass in zumindest einem Verfahrensschritt der Amboss der Schweißvorrichtung mittels der Magneteinheit der Schweißvorrichtung magnetisch in der Schweißposition gehalten wird. Vorzugsweise wird das zumindest einfach gefaltete Verpackungsmaterial vor dem Schweißvorgang um den Öffnungswinkel aufgefaltet. In zumindest einem Verfahrensschritt wird das, insbesondere um den Öffnungswinkel aufgefaltete, Verpackungsmaterial in die Schweißvorrichtung geführt und/oder in der Schweißvorrichtung geführt. Vorzugsweise wird in zumindest einem Verfahrensschritt das Auslasselement in dem Aufnahmebereich des Ambosses angeordnet. Vorzugsweise wird das Auslasselement entlang des Führungselements in der Zuführungsrichtung bewegt, bis sich das Auslasselement in dem Aufnahmebereich des Ambosses befindet. Insbesondere wird das Auslasselement in zumindest einem Verfahrensschritt an das Verpackungsmaterial geschweißt. Vorzugsweise wird das Auslasselement in einem Ultraschallschweißverfahren an das Verpackungsmaterial geschweißt. Es ist alternativ auch denkbar, dass das Auslasselement in einem Wärmekontaktschweißverfahren, insbesondere mit einem Heizstempel, einem Induktionsschweißverfahren, einem Impulsschweißverfahren, einem Zirkularschweißverfahren, einem Laserdurchstrahlschweißverfahren oder dergleichen an das Verpackungsmaterial geschweißt wird. Bevorzugt wird das Verpackungsmaterial nach dem Schweißvorgang zumindest einfach gefaltet. Vorteilhaft kann eine besonders komplikationsarme Verarbeitung des Verpackungsmaterials gewährleistet werden. Vorteilhaft kann ein präziser Schweißvorgang bei gleichzeitig einfacher Verpackungsmaterialführung ermöglicht werden. Vorzugsweise wird zumindest während des Schweißvorgangs der Amboss mittels der Magneteinheit, insbesondere mittels des Fixiermagnetelements, gehalten. Vorzugsweise wird der Amboss in zumindest einem Verfahrensschritt entlang der Ambossbewegungsachse des Ambosses bewegt. Insbesondere wird der Amboss in eine Richtung des Fixiermagnetelements bewegt. Vorzugsweise wird der Amboss, insbesondere nach einem Schweißvorgang, in eine dem Fixiermagnetelement entgegengesetzte Richtung entlang der Ambossbewegungsachse des Ambosses bewegt, wobei vorzugsweise ein Abstand zwischen dem Amboss und dem Fixiermagnetelement entsteht, besonders bevorzugt um eine Bewegung des Verpackungsmaterials zwischen dem Amboss und dem Fixiermagnetelement zu ermöglichen. Vorzugsweise wird der Amboss, insbesondere bei einer bestehenden Wirkverbindung zwischen dem Amboss und dem Fixiermagnetelement, mittels der Magneteinheit, bevorzugt mittels des Fixiermagnetelements der Magneteinheit, vor dem Schweißvorgang in die Schweißposition bewegt. Es kann vorteilhaft eine mittels der Stützeinheit erzeugte Bewegung des Ambosses zu einem Stanzen des Verpackungsmaterials und/oder der zusammenhängenden Bahn von Auslasselementen genutzt werden. Es kann vorteilhaft eine Abstützung des Ambosses durch das Fixiermagnetelement zur Realisierung eines präzisen Schweißens des Auslasselements an das Verpackungsmaterial erreicht werden.

Ferner wird vorgeschlagen, dass in zumindest einem Verfahrensschritt das Verpackungsmaterial zwischen dem Amboss und dem Fixiermagnetelement, angeordnet wird. Vorzugsweise wird das Verpackungsmaterial zwischen dem Amboss und der Magneteinheit, insbesondere dem Fixiermagnetelement der Magneteinheit, vor und/oder nach dem Schweißvorgang bewegt. Bevorzugt wird das Verpackungsmaterial in zumindest einem Verfahrensschritt zwischen dem Amboss und dem Schweißstempel angeordnet. Besonders bevorzugt wird das Verpackungsmaterial zwischen dem Amboss und dem Schweißstempel vor und/oder nach dem Schweißvorgang bewegt. Die Verpackungsmaterialbewegungsachse verläuft insbesondere zumindest im Wesentlichen senkrecht zu der Ambossbewegungsachse des Ambosses, zu der Zuführungsrichtung der Auslasselementzuführungseinheit und/oder zu der Stanzwerkzeugbewegungsachse. Vorzugsweise wird zumindest während des Schweißvorgangs das Verpackungsmaterial zwischen dem Amboss und dem Fixiermagnetelement eingeklemmt. Vorteilhaft kann der Öffnungswinkel bei der Auffaltung des Verpackungsmaterials besonders klein gehalten werden. Vorteilhaft kann ein präziser Schweißvorgang bei gleichzeitig kompakter Schweißvorrichtung erreicht werden. Vorteilhaft kann das Auslasselement mit einem besonders flachen Amboss präzise an das Verpackungsmaterial geschweißt werden.

Außerdem wird vorgeschlagen, dass in zumindest einem Verfahrensschritt der Schweißstempel relativ zur Magneteinheit bewegt wird. Vorzugsweise wird in zumindest einem Verfahrensschritt der Schweißstempel relativ zu dem Fixiermagnetelement bewegt. Bevorzugt wird der Schweißstempel zu einem Schweißen des Auslasselements an das Verpackungsmaterial bewegt, insbesondere entlang der Schweißstempelbewegungsachse. Der Schweißstempel wird bevorzugt zu einem Schweißen des Auslasselements an das Verpackungsmaterial in eine Richtung des Ambosses bewegt, insbesondere in eine Richtung des Verpackungsmaterials und/oder des Auslasselements. Bevorzugt wird zumindest während des Schweißvorgangs eine relative Anordnung des Schweißstempels zu dem Amboss einem Abschmelzen der Siegelfläche des Auslasselements angepasst. Vorzugsweise wird der Schweißstempel während des Schweißvorgangs zu einer Anpassung der relativen Anordnung zwischen dem Schweißstempel und dem Amboss an ein Abschmelzen der Siegelfläche des Auslasselements bewegt. Es kann vorteilhaft ein präziser Schweißvorgang bei gleichzeitig kompakter Bauweise des Ambosses gewährleistet werden.

Des Weiteren wird vorgeschlagen, dass, vorzugsweise in zumindest einem Ausführungsbeispiel, in zumindest einem Verfahrensschritt eine, insbesondere die zuvor bereits genannte, zusammenhängende Bahn von Auslasselementen durch ein Zusammenwirken der Magneteinheit mit dem Amboss durchtrennt wird. Insbesondere wird die zusammenhängende Bahn von Auslasselementen mittels der Stanzeinheit durchtrennt. Die Stanzeinheit wird bevorzugt mittels der Magneteinheit betätigt. Die Stanzeinheit ist besonders bevorzugt mittels einer Bewegung des Ambosses betätigbar, vorzugsweise mittels einer durch die Magneteinheit erzeugten Bewegung des Ambosses. Vorzugsweise wird die zusammenhängende Bahn von Auslasselementen durch eine Relativbewegung des ersten Teils des Ambosses zu dem zweiten Teil des Ambosses durchtrennt. Besonders bevorzugt wird die zusammenhängende Bahn von Auslasselementen derart durchtrennt, dass zumindest ein einzelnes Auslasselement separat zu der zusammenhängenden Bahn von Auslasselementen vorliegt, wobei das einzelne Auslasselement insbesondere in dem Aufnahmebereich des Ambosses angeordnet ist. Bevorzugt wird das an dem ersten Teil des Ambosses oder an dem zweiten Teil des Ambosses befestigte Stanzwerkzeug der Stanzeinheit relativ zu der zusammenhängenden Bahn von Auslasselementen bewegt, um die zusammenhängende Bahn von Auslasselementen an zumindest einer Stelle zu durchtrennen. Vorzugsweise wird die zusammenhängende Bahn von Auslasselementen mittels der Auslasselementzuführungseinheit bewegt. Besonders bevorzugt wird die zusammenhängende Bahn von Auslasselementen entlang des Führungselements der Auslasselementzuführungseinheit bewegt. Es kann vorteilhaft eine Relativbewegung des ersten Teils des Ambosses zu dem zweiten Teil des Ambosses zur Betätigung einer Stanzeinheit genutzt werden. Es kann vorteilhaft einfach eine Durchtrennung der zusammenhängenden Bahn von Auslasselementen ermöglicht werden.

Ferner wird vorgeschlagen, dass in zumindest einem Verfahrensschritt eine Perforation in das Verpackungsmaterial eingebracht wird. Vorzugsweise wird in zumindest einem Verfahrensschritt das weitere Stanzwerkzeug der Stanzeinheit relativ zu dem Schweißstempel bewegt. Insbesondere wird das weitere Stanzwerkzeug in zumindest einem Verfahrensschritt in eine Richtung des Ambosses und/oder des Verpackungsmaterials bewegt, um die Perforation in das Verpackungsmaterial einzubringen. Vorzugsweise wird die Perforation in einem von der Magneteinheit haltefreien Zustand des Ambosses in das Verpackungsmaterial eingebracht. Es ist jedoch auch denkbar, dass die Perforation in einem durch die Magneteinheit gehaltenen Zustand des Ambosses in das Verpackungsmaterial eingebracht wird. Es kann vorteilhaft eine Perforation mittels einer Schweißvorrichtung in ein Verpackungsmaterial eingebracht werden, ohne deren Platzbedarf wesentlich zu erhöhen. Vorteilhaft können zu einer Perforation eines Verpackungsmaterials zumindest teilweise bereits vorhandene Bauteile der Schweißvorrichtung genutzt werden.

Weiter wird eine Verpackungsmaschine zum Herstellen von Verpackungen aus einem, insbesondere dem zuvor bereits genannten, Verpackungsmaterial mit einem, insbesondere dem zuvor bereits genannten, Auslasselement mit einer erfindungsgemäßen Schweißvorrichtung vorgeschlagen. Die Verpackungsmaschine umfasst zumindest eine Verpackungsmaterialführungseinheit, die zumindest dazu vorgesehen ist, der Schweißvorrichtung Verpackungsmaterial vor dem Schweißvorgang zuzuführen. Die Verpackungsmaterialführungseinheit ist zumindest dazu eingerichtet, das Verpackungsmaterial nach dem Schweißen des Auslasselements an das Verpackungsmaterial von der Schweißvorrichtung abzuführen. Die Verpackungsmaschine weist vorzugsweise zumindest eine Faltstation auf, an der das Verpackungsmaterial zumindest einfach gefaltet wird. Die Verpackungsmaterialführungseinheit ist insbesondere zumindest dazu eingerichtet, das Verpackungsmaterial vor dem Einbringen in die Schweißvorrichtung zumindest um den Öffnungswinkel aufzufalten. Es kann vorteilhaft eine besonders komplikationsarme Verpackungsmaschine bereitgestellt werden.

Die erfindungsgemäße Schweißvorrichtung, das erfindungsgemäße Verfahren und/oder die erfindungsgemäße Verpackungsmaschine sollen/soll hierbei nicht auf die oben beschriebene Anwendung und Ausführungsform beschränkt sein. Insbesondere können/kann die erfindungsgemäße Schweißvorrichtung, das erfindungsgemäße Verfahren und/oder die erfindungsgemäße Verpackungsmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Verpackungsmaschine mit einer erfindungsgemäßen Schweißvorrichtung in einer schematischen Darstellung,
- Fig. 2: die erfindungsgemäße Schweißvorrichtung in einer seitlichen Darstellung,
- Fig. 3: einen schematischen Ablauf eines erfindungsgemäßen Verfahrens zum Schweißen eines Auslasselements an ein Verpackungsmaterial,
- Fig. 4: eine erfindungsgemäße Schweißvorrichtung in einer alternativen Ausführung und
- Fig. 5: einen schematischen Ablauf eines erfindungsgemäßen Verfahrens mit der erfindungsgemäßen Schweißvorrichtung in der alternativen Ausführung.

### Beschreibung der Ausführungsbeispiele

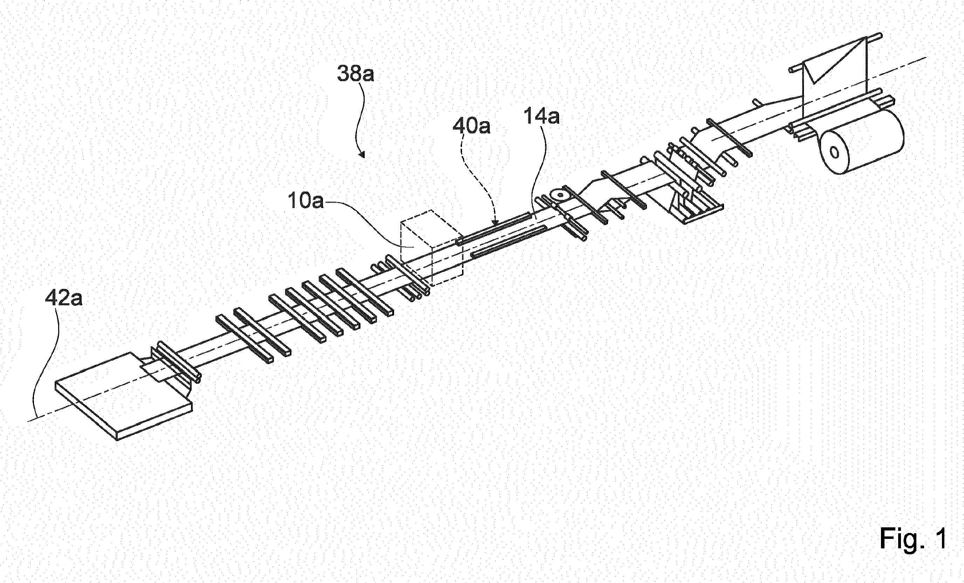

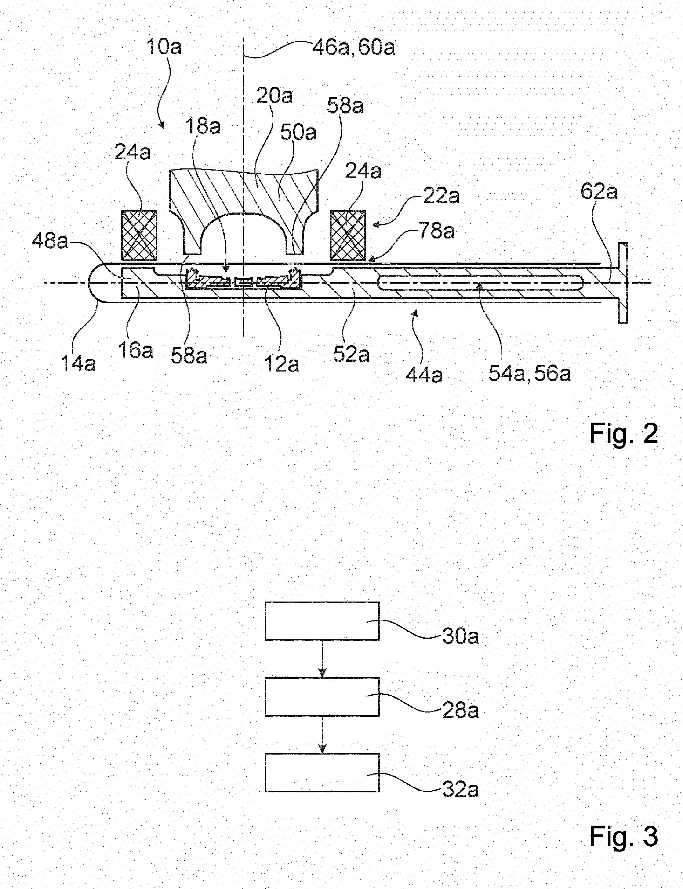

In der Figur 1 ist eine Verpackungsmaschine 38a zum Herstellen von Verpackungen aus einem Verpackungsmaterial 14a mit einem Auslasselement 12a (vgl. Figur 2) gezeigt. Die Verpackungsmaschine 38a umfasst eine Schweißvorrichtung 10a. Die Verpackungsmaschine 38a ist beispielsweise als eine Fertigbeutelanlage ausgebildet. Das Verpackungsmaterial 14a bildet eine flache Packstoffbahn. Das Verpackungsmaterial 14a ist vor einem Schweißvorgang, in dem das Auslasselement 12a an das Verpackungsmaterial 14a mittels der Schweißvorrichtung 10a geschweißt wird, zumindest einfach gefaltet. Das Verpackungsmaterial 14a ist zumindest dazu vorgesehen, zumindest vor dem Schweißvorgang zumindest teilweise um einen Öffnungswinkel aufgefaltet zu werden. Die Schweißvorrichtung 10a umfasst zumindest eine Materialführungsbahn 40a, die dazu eingerichtet ist, einem Schweißstempel 20a der Schweißvorrichtung 10a und einem Amboss 16a das Verpackungsmaterial 14a zuzuführen und das Verpackungsmaterial 14a nach einem Schweißvorgang von dem Schweißstempel 20a und dem Amboss 16a abzuführen (vgl. Figur 2). Eine Materialführungsachse 42a der Materialführungsbahn 40a verläuft zumindest im Wesentlichen senkrecht zu einer Zuführungsrichtung einer Auslasselementzuführungseinheit 44a der Schweißvorrichtung 10a und/oder senkrecht zu einer Ambossbewegungsachse 46a des Ambosses 16a (vgl. Figur 2). Die Materialführungsbahn 40a ist zumindest teilweise von dem Amboss 16a gebildet oder separat zu dem Amboss 16a ausgebildet (vgl. Figur 2).

Figur 2 zeigt die Schweißvorrichtung 10a zum Schweißen des Auslasselements 12a an das Verpackungsmaterial 14a. Die Schweißvorrichtung 10a umfasst den Amboss 16a. Der Amboss 16a ist freitragend ausgebildet. Der Amboss 16a weist zumindest einen Aufnahmebereich 18a zur Aufnahme des zu schweißenden Auslasselements 12a auf. Weiter umfasst die Schweißvorrichtung 10a zumindest den Schweißstempel 20a, der zu einem Schweißen des Auslasselements 12a an das Verpackungsmaterial 14a dazu eingerichtet ist, mit dem Amboss 16a zusammenzuwirken. Die Schweißvorrichtung 10a umfasst zumindest eine Magneteinheit 22a, die dazu eingerichtet ist, den Amboss 16a zumindest temporär in einer Schweißposition, in der der Schweißstempel 20a dazu eingerichtet ist, das Auslasselement 12a an das Verpackungsmaterial 14a zu schweißen, zu halten. Die Magneteinheit 22a ist dazu vorgesehen, den Amboss 16a zumindest während eines Schweißvorgangs in der Schweißposition zu halten. Die Magneteinheit 22a weist zwei Fixiermagnetelemente 24a auf. Die Fixiermagnetelemente 24a sind zumindest dazu vorgesehen, den Amboss 16a während des Schweißvorgangs in der Schweißposition zu halten. Die Magneteinheit 22a, insbesondere die Fixiermagnetelemente 24a, wirkt/wirken mit dem Amboss 16a zusammen, um den Amboss 16a mit einer Haltekraft zu beaufschlagen. Eine mittels der Magneteinheit 22a erzeugte Haltekraft auf den Amboss 16a ist einstellbar. Die Magneteinheit 22a ist derart einstellbar, dass der Amboss 16a in zumindest einem Betriebszustand frei von einer Haltekraft durch die Magneteinheit 22a ist. Die Fixiermagnetelemente 24a sind als Elektromagnete ausgebildet. Die Schweißvorrichtung 10a weist zumindest eine Spannungsquelle auf, die dazu eingerichtet ist, die Magneteinheit 22a mit elektrischer Energie zu versorgen (hier nicht dargestellt). Eine Haltekraft der Fixiermagnetelemente 24a ist über die Spannungsquelle regelbar, insbesondere über eine an den Fixiermagnetelementen 24a angelegte Stromstärke regelbar. Die Fixiermagnetelemente 24a sind derart einstellbar, dass die Fixiermagnetelemente 24a den Amboss 16a mit keiner Haltekraft beaufschlagen. Der Amboss 16a ist in einem Bereich des Aufnahmebereichs 18a frei von einer festen Stütze oder einer Verbindungs- oder Lagerstelle ausgebildet. Der Amboss 16a weist ein freies Ende 48a und ein befestigtes oder eingespanntes Ende auf. Der Amboss 16a ist als ein freitragender Haltearm ausgebildet. Die Magneteinheit 22a ist derart relativ zu dem Amboss 16a angeordnet, dass das Verpackungsmaterial 14a zwischen den Fixiermagnetelementen 24a und dem Amboss 16a anordenbar ist. Zwischen den Fixiermagnetelementen 24a und dem Amboss 16a ist, insbesondere zumindest in einem haltefreien Zustand des Ambosses 16a, ein Spalt 78a gebildet. Das Verpackungsmaterial 14a ist zwischen den Fixiermagnetelementen 24a und dem Amboss 16a in zumindest einem Betriebszustand bewegbar, zumindest in einem haltefreien Zustand des Ambosses 16a. Der Amboss 16a und die Fixiermagnetelemente 24a sind derart relativ zueinander anordenbar, dass der Amboss 16a und die Fixiermagnetelemente 24a zueinander beabstandet sind. Das Verpackungsmaterial 14a ist dazu vorgesehen, zumindest zwischen zwei aufeinanderfolgenden Schweißvorgängen zwischen dem Amboss 16a und den Fixiermagnetelementen 24a bewegt zu werden, insbesondere mittels der Materialführungsbahn 40a. Das Verpackungsmaterial 14a ist zumindest während des Schweißvorgangs zwischen den Fixiermagnetelementen 24a und dem Amboss 16a eingeklemmt. Das Verpackungsmaterial 14a ist zumindest während des Schweißvorgangs zwischen dem Amboss 16a und dem Schweißstempel 20a sowie zwischen dem Amboss 16a und den Fixiermagnetelementen 24a angeordnet.

Der Schweißstempel 20a ist dazu eingerichtet, das Auslasselement 12a an das Verpackungsmaterial 14a zu schweißen, wenn der Schweißstempel 20a und der Amboss 16a in der Schweißposition angeordnet sind. Der Schweißstempel 20a ist dazu eingerichtet, das Auslasselement 12a auf einer dem Schweißstempel 20a abgewandten Seite des Verpackungsmaterials 14a an das Verpackungsmaterial 14a zu schweißen. Die Schweißposition ist durch eine relative Anordnung, vorzugsweise durch einen relativen Abstand, des Ambosses 16a zu dem Schweißstempel 20a definiert, die ein Schweißen des Auslasselements 12a an das Verpackungsmaterial 14a ermöglicht. Die Schweißvorrichtung 10a ist als eine Ultraschallschweißvorrichtung ausgebildet. Der Schweißstempel 20a ist als Sonotrode ausgebildet. Es ist jedoch auch denkbar, dass die Schweißvorrichtung 10a als eine Wärmekontaktschweißvorrichtung, insbesondere mit einem Heizstempel, eine Induktionsschweißvorrichtung, eine Impulsschweißvorrichtung, eine Zirkularschweißvorrichtung, eine Laserdurchstrahlschweißvorrichtung oder dergleichen ausgebildet ist. Das Auslasselement 12a ist als Ventil, insbesondere als Aromaschutzventil, ausgebildet. Es ist jedoch auch denkbar, dass das Auslasselement 12a als Auslassöffnung, als Verschluss oder dergleichen ausgebildet ist. Die Schweißvorrichtung 10a umfasst zumindest die Auslasselementzuführungseinheit 44a, die zumindest dazu eingerichtet ist, dem Aufnahmebereich 18a des Ambosses 16a das Auslasselement 12a zuzuführen.

Der Aufnahmebereich 18a ist an einer Ambossoberseite 50a des Ambosses 16a angeordnet. Die Ambossoberseite 50a ist an einer dem Schweißstempel 20a zugewandten Seite des Ambosses 16a am Amboss 16a angeordnet. Die Ambossoberseite 50a ist an einer den Fixiermagnetelementen 24a zugewandten Seite des Ambosses 16a am Amboss 16a angeordnet. Der Aufnahmebereich 18a ist von der Ambossoberseite 50a des Ambosses 16a gebildet. Der mittels der Ambossoberseite 50a gebildete Aufnahmebereich 18a ist passgenau zu dem Auslasselement 12a ausgebildet. Die Auslasselementzuführungseinheit 44a ist an dem Amboss 16a angeordnet. Die Auslasselementzuführungseinheit 44a ist in den Amboss 16a integriert. Die Auslasselementzuführungseinheit 44a ist zumindest in einem Betriebszustand auf einer dem Schweißstempel 20a abgewandten Seite des Verpackungsmaterials 14a angeordnet. Es ist jedoch alternativ auch denkbar, dass die Auslasselementzuführungseinheit 44a zumindest in einem Betriebszustand auf einer dem Schweißstempel 20a zugewandten Seite des Verpackungsmaterials 14a angeordnet ist. Die Auslasselementzuführungseinheit 44a weist zumindest ein Führungselement 52a auf, wobei das Auslasselement 12a dazu vorgesehen ist, bei einer Zuführung in den Aufnahmebereich 18a des Ambosses 16a entlang des Führungselements 52a geführt zu werden. Das Führungselement 52a ist als eine Führungsschiene ausgebildet. Das Führungselement 52a ist einstückig mit dem Amboss 16a ausgebildet ist. Es ist alternativ denkbar, dass die Auslasselementzuführungseinheit 44a, insbesondere das Führungselement 52a, separat von dem Amboss 16a ausgebildet und/oder angeordnet ist. Die Zuführungsrichtung der Auslasselementzuführungseinheit 44a verläuft zumindest teilweise parallel zu einer Haupterstreckungsachse 62a des Ambosses 16a und zumindest teilweise senkrecht zu der Ambossbewegungsachse 46a des Ambosses 16a.

Der Amboss 16a ist zumindest teilweise aus einem magnetischen Material gebildet und/oder die Magneteinheit 22a umfasst zumindest ein Magnetelement, das an dem Amboss 16a fixiert ist. Der Amboss 16a ist zumindest in einem Bereich des Ambosses 16a, in dem der Amboss 16a dazu vorgesehen ist, mit der Magneteinheit 22a zusammenzuwirken, zumindest teilweise aus einem magnetischen Material gebildet und/oder das Magnetelement ist zumindest in dem Bereich des Ambosses 16a angeordnet, in dem der Amboss 16a dazu vorgesehen ist, mit der Magneteinheit 22a zusammenzuwirken. Das Magnetelement kann beispielsweise als ein Permanentmagnet oder als ein Bauteil aus einem magnetischen Material ausgebildet sein.

Der Amboss 16a und die Fixiermagnetelemente 24a sind relativ zueinander bewegbar. Der Amboss 16a weist die Ambossbewegungsachse 46a auf, entlang derer und/oder um die der Amboss 16a bewegbar ist. Die Ambossbewegungsachse 46a verläuft bevorzugt zumindest im Wesentlichen senkrecht zu der Haupterstreckungsachse 62a des Ambosses 16a und/oder zu der Zuführungsrichtung der Auslasselementzuführungseinheit 44a. Der Amboss 16a ist dazu vorgesehen, durch eine Biegung des Ambosses 16a bewegt zu werden. Die Magneteinheit 22a ist dazu eingerichtet, eine Bewegung des Ambosses 16a, insbesondere eine Biegung des Ambosses 16a, zu erzeugen. Der Amboss 16a weist zumindest eine Ausnehmung 54a auf, die dazu vorgesehen ist, eine Biegung des Ambosses 16a an einer bevorzugten Biegestelle zu erzeugen. Die Ausnehmung 54a ist als ein Langloch 56a ausgebildet. Eine Haupterstreckungsachse des Langlochs 56a verläuft zumindest im Wesentlichen parallel zu der Haupterstreckungsachse 62a des Ambosses 16a. Es ist alternativ denkbar, dass der Amboss 16a ausnehmungsfrei ausgebildet ist oder eine Vielzahl von Ausnehmungen aufweist, wobei die Ausnehmungen der Vielzahl von Ausnehmungen beispielsweise entlang der Haupterstreckungsachse 62a des Ambosses 16a ausgebildet sind. Die Biegestelle befindet sich auf einer Seite des Ambosses 16a, die dem freien Ende 48a des Ambosses 16a abgewandt ist. Es ist jedoch auch denkbar, dass sich die Biegestelle auf einer Seite des Ambosses 16a befindet, an der das freie Ende 48a des Ambosses 16a angeordnet ist. Die Haupterstreckungsachse 62a des Ambosses 16a verläuft zumindest in der Schweißposition parallel zu einer Schweißfläche 58a des Schweißstempels 20a. Alternativ ist auch denkbar, dass der Amboss 16a beweglich an einem Gehäuseelement der Schweißvorrichtung 10a gelagert ist und/oder mehrteilig ausgebildet ist. Der Amboss 16a kann beispielsweise mittels eines linearen Walzkörperlagers, eines linearen Gleitlagers oder dergleichen an dem Gehäuseelement gelagert sein und/oder Teile des mehrteiligen Ambosses 16a können relativ zueinander beweglich gelagert sein. Es ist denkbar, dass der Amboss 16a entlang der und/oder um die Ambossbewegungsachse 46a des Ambosses 16a beweglich gelagert ist. Der Amboss 16a ist dazu vorgesehen, vor dem Schweißvorgang in die Schweißposition bewegt zu werden. Die Magneteinheit 22a ist dazu vorgesehen, den Amboss 16a in eine Richtung des Schweißstempels 20a und/oder der Fixiermagnetelemente 24a zu bewegen. Die Magneteinheit 22a ist dazu eingerichtet, den Amboss 16a in die Schweißposition zu bewegen. Der Amboss 16a ist dazu vorgesehen, sich nach dem Schweißvorgang in eine Auslasselementzuführungsposition, betrachtet relativ zu der Magneteinheit 22a, zu bewegen. Der Amboss 16a ist in der Schweißposition mit einer Rückstellkraft beaufschlagt, die in eine Richtung der Auslasselementzuführungsposition des Ambosses 16a gerichtet ist. Die Rückstellkraft ist dazu vorgesehen, den Amboss 16a in die Auslasselementzuführungsposition, insbesondere nach dem Schweißvorgang, zu bewegen. Durch eine Bewegung, bevorzugt eine Biegung, des Ambosses 16a aus der Auslasselementzuführungsposition heraus, ist die Rückstellkraft erzeugbar. Es ist alternativ denkbar, dass der Amboss 16a eine Bewegungseinheit umfasst, die dazu eingerichtet ist, den Amboss 16a in die Auslasselementzuführungsposition zu bewegen. Die Bewegungseinheit kann beispielsweise pneumatisch, elektrisch, mechanisch oder dergleichen ausgebildet sein. Es ist auch denkbar, dass die Bewegungseinheit zumindest ein Federelement oder dergleichen umfasst, das zu einer Rückstellung des Ambosses 16a in die Auslasselementzuführungsposition vorgesehen ist. Das Federelement kann beispielsweise als eine Spiralfeder, als eine Blattfeder oder dergleichen ausgebildet sein. Die Auslasselementzuführungseinheit 44a ist dazu eingerichtet, dem Aufnahmebereich 18a des Ambosses 16a zumindest in der Auslasselementzuführungsposition des Ambosses 16a das Auslasselement 12a zuzuführen.

Der Amboss 16a ist während des Schweißvorgangs relativ zu den Fixiermagnetelementen 24a positionsfest angeordnet. Der Schweißstempel 20a ist dazu eingerichtet, zu einem Schweißen des Auslasselements 12a an das Verpackungsmaterial 14a bewegt zu werden. Der Schweißstempel 20a weist zumindest eine Schweißstempelbewegungsachse 60a auf, entlang derer der Schweißstempel 20a bewegbar ist. Die Schweißstempelbewegungsachse 60a verläuft zumindest im Wesentlichen senkrecht zu der Haupterstreckungsachse 62a des Ambosses 16a, zu der Zuführungsrichtung der Auslasselementzuführungseinheit 44a und/oder der Materialführungsachse 42a der Materialführungsbahn 40a. Die Schweißstempelbewegungsachse 60a verläuft zumindest im Wesentlichen parallel zu der Ambossbewegungsachse 46a des Ambosses 16a. Der Schweißstempel 20a ist dazu vorgesehen, sich zu einem Schweißen des Auslasselements 12a an das Verpackungsmaterial 14a in Richtung des Auslasselements 12a und/oder des Verpackungsmaterials 14a zu bewegen. Es ist denkbar, dass sich die relative Anordnung des Ambosses 16a zu dem Schweißstempel 20a, insbesondere ein Abstand des Ambosses 16a zu dem Schweißstempel 20a, während des Schweißvorgangs ändert, vorzugsweise aufgrund eines Abschmelzens einer Siegelfläche des Auslasselements 12a. Der Schweißstempel 20a ist dazu eingerichtet, die relative Anordnung zu dem Amboss 16a dem Abschmelzen der Siegelfläche des Auslasselements 12a während des Schweißvorgangs anzupassen.

Figur 3 zeigt schematisch einen Ablauf eines Verfahrens zum Schweißen des Auslasselements 12a an das Verpackungsmaterial 14a mittels der Schweißvorrichtung 10a. In zumindest einem Verfahrensschritt 30a wird das Verpackungsmaterial 14a zwischen dem Amboss 16a und den Fixiermagnetelementen 24a der Magneteinheit 22a angeordnet. Das zumindest einfach gefaltete Verpackungsmaterial 14a wird vor dem Schweißvorgang um den Öffnungswinkel aufgefaltet. In dem zumindest einen Verfahrensschritt 30a wird das um den Öffnungswinkel aufgefaltete Verpackungsmaterial 14a in die Schweißvorrichtung 10a geführt und/oder in der Schweißvorrichtung 10a geführt. In dem zumindest einen Verfahrensschritt 30a wird das Auslasselement 12a in dem Aufnahmebereich 18a des Ambosses 16a angeordnet. Das Auslasselement 12a wird entlang des Führungselements 52a in der Zuführungsrichtung bewegt, bis sich das Auslasselement 12a in dem Aufnahmebereich 18a des Ambosses 16a befindet. Das Verpackungsmaterial 14a wird zwischen dem Amboss 16a und der Magneteinheit 22a, insbesondere den Fixiermagnetelementen 24a der Magneteinheit 22a, vor und/oder nach dem Schweißvorgang bewegt. Das Verpackungsmaterial 14a wird in dem zumindest einen Verfahrensschritt 30a zwischen dem Amboss 16a und dem Schweißstempel 20a angeordnet. Zumindest während des Schweißvorgangs wird das Verpackungsmaterial 14a zwischen dem Amboss 16a und den Fixiermagnetelementen 24a eingeklemmt. Das Verpackungsmaterial 14a wird zwischen dem Amboss 16a und dem Schweißstempel 20a vor und/oder nach dem Schweißvorgang bewegt. Eine Verpackungsmaterialbewegungsachse des Verpackungsmaterials 14a verläuft zumindest im Wesentlichen senkrecht zu der Ambossbewegungsachse 46a des Ambosses 16a und/oder zu der Zuführungsrichtung der Auslasselementzuführungseinheit 44a.

Der Amboss 16a wird in zumindest einem Verfahrensschritt 28a entlang der Ambossbewegungsachse 46a des Ambosses 16a bewegt. Der Amboss 16a wird in eine Richtung der Fixiermagnetelemente 24a bewegt. Der Amboss 16a wird bei einer bestehenden Wirkverbindung zwischen dem Amboss 16a und den Fixiermagnetelementen 24a mittels der Magneteinheit 22a, bevorzugt mittels den Fixiermagnetelementen 24a, vor dem Schweißvorgang in die Schweißposition bewegt. In dem zumindest einen Verfahrensschritt 28a wird der Amboss 16a der Schweißvorrichtung 10a mittels der Magneteinheit 22a der Schweißvorrichtung 10a magnetisch in der Schweißposition gehalten.

In zumindest einem Verfahrensschritt 32a wird der Schweißstempel 20a relativ zu der Magneteinheit 22a bewegt. In dem zumindest einen Verfahrensschritt 32a wird der Schweißstempel 20a relativ zu den Fixiermagnetelementen 24a bewegt. Der Schweißstempel 20a wird zu einem Schweißen des Auslasselements 12a an das Verpackungsmaterial 14a bewegt, insbesondere entlang der Schweißstempelbewegungsachse 60a. Der Schweißstempel 20a wird zu einem Schweißen des Auslasselements 12a an das Verpackungsmaterial 14a in eine Richtung des Ambosses 16a bewegt, insbesondere in eine Richtung des Verpackungsmaterials 14a und/oder des Auslasselements 12a. Zumindest während des Schweißvorgangs wird eine relative Anordnung des Schweißstempels 20a zu dem Amboss 16a einem Abschmelzen der Siegelfläche des Auslasselements 12a angepasst. Der Schweißstempel 20a wird während des Schweißvorgangs zu einer Anpassung der relativen Anordnung zwischen dem Schweißstempel 20a und dem Amboss 16a an ein Abschmelzen der Siegelfläche des Auslasselements 12a bewegt.

Der Amboss 16a wird nach einem Schweißvorgang in eine den Fixiermagnetelementen 24a entgegengesetzte Richtung entlang der Ambossbewegungsachse 46a des Ambosses 16a bewegt, um einen Abstand zwischen dem Amboss 16a und den Fixiermagnetelementen 24a herzustellen, um eine Bewegung des Verpackungsmaterials 14a zwischen dem Amboss 16a und den Fixiermagnetelementen 24a zu ermöglichen.

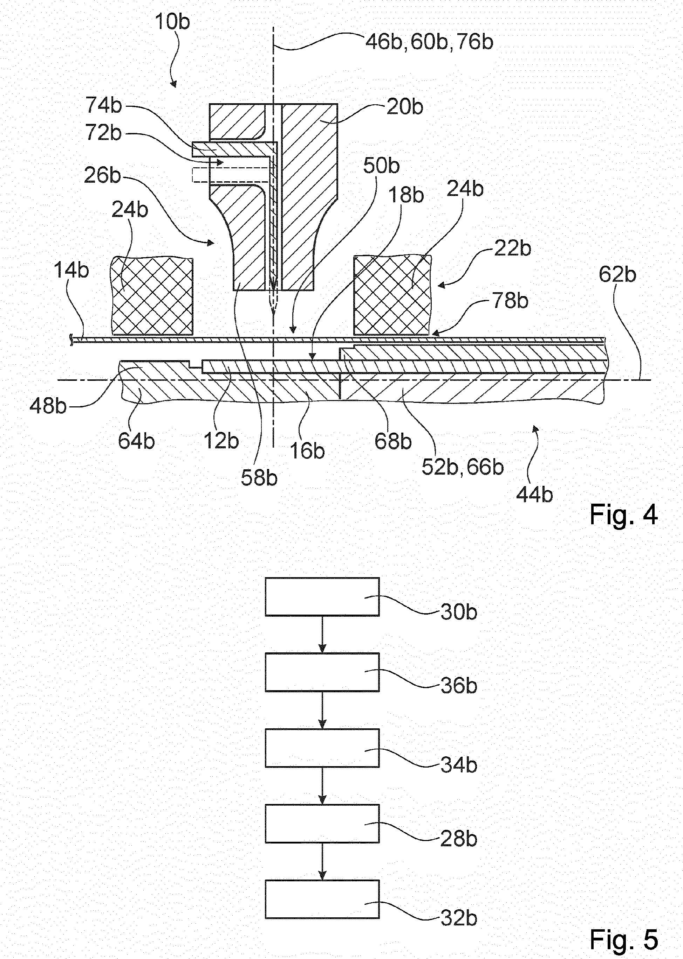

In den Figuren 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figuren 4 und 5 ist der Buchstabe a durch die Buchstaben b ersetzt.

Figur 4 zeigt eine Schweißvorrichtung 10b zum Schweißen eines Auslasselements 12b an ein Verpackungsmaterial 14b. Die Schweißvorrichtung 10b umfasst zumindest einen, insbesondere freitragenden, Amboss 16b, der zumindest einen Aufnahmebereich 18b zur Aufnahme des zu schweißenden Auslasselements 12b umfasst. Die Schweißvorrichtung 10b umfasst zumindest einen Schweißstempel 20b, der zu einem Schweißen des Auslasselements 12b an das Verpackungsmaterial 14b dazu eingerichtet ist, mit dem Amboss 16b zusammenzuwirken. Der Schweißstempel 20b ist als Sonotrode ausgebildet. Die Schweißvorrichtung 10b umfasst zumindest eine Magneteinheit 22b, die dazu eingerichtet ist, den Amboss 16b zumindest temporär in einer Schweißposition, in der der Schweißstempel 20b dazu eingerichtet ist, das Auslasselement 12b an das Verpackungsmaterial 14b zu schweißen, zu halten.

Die Schweißvorrichtung 10b umfasst zumindest die Auslasselementzuführungseinheit 44b, die zumindest dazu eingerichtet ist, dem Aufnahmebereich 18b des Ambosses 16b das Auslasselement 12b zuzuführen. Die Auslasselementzuführungseinheit 44b ist an dem Amboss 16b angeordnet. Die Auslasselementzuführungseinheit 44b ist in den Amboss 16b integriert. Die Auslasselementzuführungseinheit 44b weist zumindest ein Führungselement 52b auf, wobei das Auslasselement 12b dazu vorgesehen ist, bei einer Zuführung in den Aufnahmebereich 18b des Ambosses 16b entlang des Führungselements 52b geführt zu werden. Das Führungselement 12b ist dazu vorgesehen, eine Vielzahl von Auslasselementen 12b zu führen. Die Auslasselemente 12b der Vielzahl von Auslasselementen 12b bilden eine zusammenhängende Bahn von Auslasselementen 12b. Das Führungselement 52b ist als eine Führungsschiene ausgebildet.

Die Schweißvorrichtung 10b umfasst zumindest eine Stanzeinheit 26b, die zumindest dazu vorgesehen ist, die zusammenhängende Bahn von Auslasselementen 12b zu durchtrennen. Die Stanzeinheit 26b ist zumindest mittels der Magneteinheit 22b betätigbar. Der Amboss 16b ist zweiteilig ausgebildet. Ein erster Teil 64b des Ambosses 16b und ein zweiter Teil 66b des Ambosses 16b sind relativ zueinander bewegbar. Der erste Teil 64b des Ambosses 16b und der zweite Teil 66b des Ambosses 16b sind relativ zueinander entlang der Ambossbewegungsachse 46b bewegbar. Die Stanzeinheit 26b ist zumindest mittels einer Bewegung des ersten Teils 64b des Ambosses 16b und des zweiten Teils 66b des Ambosses 16b relativ zueinander betätigbar. Der erste Teil 64b des Ambosses 16b und/oder der zweite Teil 66b des Ambosses 16b sind/ist an einem Gehäuseelement der Schweißvorrichtung 10b befestigt (hier nicht dargestellt). Der erste Teil 64b des Ambosses 16b kann alternativ auch mittels eines linearen Walzkörperlagers, eines linearen Gleitlagers oder dergleichen an dem zweiten Teil 66b des Ambosses 16b gelagert sein. Es ist auch denkbar, dass der erste Teil 64b des Ambosses 16b und/oder der zweite Teil 66b des Ambosses 16b an dem Gehäuseelement der Schweißvorrichtung 10b beweglich gelagert sind/ist. Die Auslasselementzuführungseinheit 44b, insbesondere das Führungselement 52b, ist an dem zweiten Teil 66b des Ambosses 16b angeordnet. Der Aufnahmebereich 18b des Ambosses 16b ist an dem ersten Teil 64b des Ambosses 16b angeordnet, wobei der erste Teil 64b des Ambosses 16b ein freies Ende 48b des Ambosses 16b umfasst. Die Stanzeinheit 26b umfasst zumindest ein Stanzwerkzeug 68b, welches an dem Amboss 16b, insbesondere an dem ersten Teil 64b des Ambosses 16b oder an dem zweiten Teil 66b des Ambosses 16b, angeordnet ist. Eine Kante des Ambosses 16b, die an dem ersten Teil 64b des Ambosses 16b bzw. an dem zweiten Teil 66b des Ambosses 16b angeordnet ist, bildet eine Stanzkante für das Stanzwerkzeug 68b. Das Stanzwerkzeug 68b ist zwischen dem ersten Teil 64b des Ambosses 16b und dem zweiten Teil 66b des Ambosses 16b angeordnet. Das Stanzwerkzeug 68b ist dazu vorgesehen, die zusammenhängende Bahn von Auslasselementen 12b, bevorzugt in einzelne Auslasselemente 12b, zu teilen. Das Stanzwerkzeug 68b ist dazu vorgesehen, die zusammenhängende Bahn von Auslasselementen 12b mittels einer Relativbewegung des ersten Teils 64b des Ambosses 16b zu dem zweiten Teil 66b des Ambosses 16b zu durchtrennen. Das Stanzwerkzeug 68b ist als Stanzmesser oder Stanzkante ausgebildet. Es ist jedoch denkbar, dass das Stanzwerkzeug 68b als ein anderes, dem Fachmann bekanntes Stanzwerkzeug ausgebildet ist. Die Bewegung des ersten Teils 64b des Ambosses 16b relativ zu dem zweiten Teil 66b des Ambosses 16b ist mittels der Magneteinheit 22b erzeugbar. Ein mittels der Magneteinheit 22b erzeugbarer maximaler Hubweg des ersten Teils 64b des Ambosses 16b ist verschieden von einem mittels der Magneteinheit 22b erzeugbaren maximalen Hubweg des zweiten Teils 66b des Ambosses 16b. Es ist auch denkbar, dass die Magneteinheit 22b nur eine Bewegung des ersten Teils 64b oder des zweiten Teils 66b des Ambosses 16b erzeugt.

Die Stanzeinheit 26b ist zumindest dazu vorgesehen, eine Perforation in das Verpackungsmaterial 14b einzubringen, wobei die Stanzeinheit 26b zumindest teilweise an dem Schweißstempel 20b angeordnet ist. Die Stanzeinheit 26b ist zumindest teilweise innerhalb des Schweißstempels 20b angeordnet. Der Schweißstempel 20b weist zumindest eine Ausnehmung 72b auf, in der die Stanzeinheit 26b zumindest teilweise anordenbar ist. Die Stanzeinheit 26b umfasst ein weiteres Stanzwerkzeug 74b, das in der Ausnehmung 72b des Schweißstempels 20b angeordnet ist. Es ist alternativ auch denkbar, dass die Stanzeinheit 26b zumindest teilweise an einer Außenseite des Schweißstempels 20b angeordnet ist. Das weitere Stanzwerkzeug 74b ist als Lochstanzwerkzeug ausgebildet. Es ist jedoch auch denkbar, dass das weitere Stanzwerkzeug 74b als ein anderes, dem Fachmann bekanntes Stanzwerkzeug ausgebildet ist. Das weitere Stanzwerkzeug 74b ist beweglich an dem Schweißstempel 20b gelagert. Das weitere Stanzwerkzeug 74b weist eine Stanzwerkzeugbewegungsachse 76b auf, entlang derer das weitere Stanzwerkzeug 74b bewegbar ist. Die Stanzwerkzeugbewegungsachse 76b des weiteren Stanzwerkzeugs 74b verläuft zumindest im Wesentlichen parallel zu der Ambossbewegungsachse 46b des Ambosses 16b. Die Stanzwerkzeugbewegungsachse 76b des weiteren Stanzwerkzeugs 74b verläuft zumindest im Wesentlichen senkrecht zu der Haupterstreckungsachse 62b des Ambosses 16b, zu der Zuführungsrichtung der Auslasselementzuführungseinheit 44b und/oder der Materialführungsachse 42b der Materialführungsbahn 40b. Die Stanzeinheit 26b ist dazu eingerichtet, mittels des weiteren Stanzwerkzeugs 74b die Perforation in das Verpackungsmaterial 14b einzubringen. Zum Einbringen der Perforation in das Verpackungsmaterial 14b ist die Stanzeinheit 26b dazu eingerichtet, das weitere Stanzwerkzeug 74b relativ zu dem Verpackungsmaterial 14b, insbesondere in eine Richtung des Verpackungsmaterials 14b, zu bewegen.

Figur 5 zeigt einen schematischen Ablauf eines Verfahrens zum Schweißen des Auslasselements 12b an das Verpackungsmaterial 14b mittels der Schweißvorrichtung 10b. In zumindest einem Verfahrensschritt 36b wird eine Perforation in das Verpackungsmaterial 14b eingebracht. In zumindest dem einen Verfahrensschritt 36b wird das weitere Stanzwerkzeug 74b der Stanzeinheit 26b relativ zu dem Schweißstempel 20b bewegt. Das weitere Stanzwerkzeug 74b wird zumindest in dem einen Verfahrensschritt 36b in eine Richtung des Ambosses 16b und/oder des Verpackungsmaterials 14b bewegt, um die Perforation in das Verpackungsmaterial 14b einzubringen. Die Perforation wird in einem von der Magneteinheit 22b haltefreien Zustand des Ambosses 16b in das Verpackungsmaterial 14b eingebracht.

In zumindest einem Verfahrensschritt 34b wird eine zusammenhängende Bahn von Auslasselementen 12b durch ein Zusammenwirken der Magneteinheit 22b mit dem Amboss 16b durchtrennt. Die zusammenhängende Bahn von Auslasselementen 12b wird durch eine Relativbewegung des ersten Teils 64b des Ambosses 16b zu dem zweiten Teil 66b des Ambosses 16b durchtrennt. Die zusammenhängende Bahn von Auslasselementen 12b wird derart durchtrennt, dass zumindest ein einzelnes Auslasselement 12b separat zu der zusammenhängenden Bahn von Auslasselementen 12b vorliegt, wobei das einzelne Auslasselement 12b in dem Aufnahmebereich 18b des Ambosses 16b angeordnet ist. Das an dem ersten Teil 64b des Ambosses 16b oder an dem zweiten Teil 66b des Ambosses 16b befestigte Stanzwerkzeug 68b der Stanzeinheit 26b wird relativ zu der zusammenhängenden Bahn von Auslasselementen 12b bewegt, um die zusammenhängende Bahn von Auslasselementen 12b an zumindest einer Stelle zu durchtrennen. Die zusammenhängende Bahn von Auslasselementen 12b wird mittels der Auslasselementzuführungseinheit 44b bewegt. Die zusammenhängende Bahn von Auslasselementen 12b wird entlang des Führungselements 52b der Auslasselementzuführungseinheit 44b bewegt. In zumindest einem Verfahrensschritt 28b wird der Amboss 16b der Schweißvorrichtung 10b mittels der Magneteinheit 22b der Schweißvorrichtung 10b magnetisch in der Schweißposition gehalten.

## Patentansprüche

1. Schweißvorrichtung (10a; 10b) zum Schweißen eines Auslasselements (12a; 12b), insbesondere eines Ventils, an ein Verpackungsmaterial (14a; 14b), mit zumindest einem, insbesondere freitragenden, Amboss (16a; 16b), der zumindest einen Aufnahmebereich (18a; 18b) zur Aufnahme des zu schweißenden Auslasselements (12a; 12b) umfasst, und mit zumindest einem Schweißstempel (20a; 20b), insbesondere einer Sonotrode, der zu einem Schweißen des Auslasselements (12a; 12b) an das Verpackungsmaterial (14a; 14b) dazu eingerichtet ist, mit dem Amboss (16a; 16b) zusammenzuwirken, **gekennzeichnet durch** zumindest eine Magneteinheit (22a; 22b), die dazu eingerichtet ist, den Amboss (16a; 16b) zumindest temporär in einer Schweißposition, in der der Schweißstempel (20a; 20b) dazu eingerichtet ist, das Auslasselement (12a; 12b) an das Verpackungsmaterial (14a; 14b) zu schweißen, zu halten.

2. Schweißvorrichtung (10a; 10b) nach Anspruch 1, **dadurch gekennzeichnet, dass** der Amboss (16a; 16b) zumindest teilweise aus einem magnetischen Material gebildet ist und/oder dass die Magneteinheit (22a; 22b) zumindest ein Magnetelement aufweist, das an dem Amboss (16a; 16b) fixiert ist.

3. Schweißvorrichtung (10a; 10b) nach Anspruch 1 oder 2, **dadurch gekennzeichnet, dass** die Magneteinheit (22a; 22b) zumindest ein Fixiermagnetelement (24a; 24b) umfasst, wobei der Amboss (16a; 16b) und das Fixiermagnetelement (24a; 24b) relativ zueinander bewegbar sind.

4. Schweißvorrichtung (10a; 10b) nach einem der vorhergehenden Ansprüche, **dadurch gekennzeichnet, dass** die Magneteinheit (22a; 22b) zumindest ein Fixiermagnetelement (24a; 24b) umfasst, wobei der Schweißstempel (20a; 20b) und das Fixiermagnetelement (24a; 24b) zueinander bewegbar sind.

5. Schweißvorrichtung (10a; 10b) nach einem der vorhergehenden Ansprüche, **dadurch gekennzeichnet, dass** die Magneteinheit (22a; 22b) zumindest ein Fixiermagnetelement (24a; 24b) umfasst, das als Elektromagnet ausgebildet ist.

6. Schweißvorrichtung (10a; 10b) nach einem der vorhergehenden Ansprüche, **gekennzeichnet durch** eine Stanzeinheit (26b), die zumindest dazu vorgesehen ist, eine zusammenhängende Bahn von Auslasselementen (12b) zu durchtrennen, wobei die Stanzeinheit (26b) zumindest mittels der Magneteinheit (22b) betätigbar ist.

7. Schweißvorrichtung (10a; 10b) nach dem Oberbegriff des Anspruchs 1, insbesondere nach einem der vorhergehenden Ansprüche, **gekennzeichnet durch** zumindest eine Stanzeinheit (26b), die zumindest dazu vorgesehen ist, eine Perforation in das Verpackungsmaterial (14b) einzubringen, wobei die Stanzeinheit (26b) zumindest teilweise an dem Schweißstempel (20b) angeordnet ist.

8. Verfahren zum Schweißen eines Auslasselements (12a; 12b) an ein Verpackungsmaterial (14a; 14b) mittels einer Schweißvorrichtung (10a; 10b) nach einem der vorhergehenden Ansprüche, **dadurch gekennzeichnet, dass** in zumindest einem Verfahrensschritt (28a; 28b) der Amboss (16a; 16b) der Schweißvorrichtung (10a; 10b) mittels der Magneteinheit (22a; 22b) der Schweißvorrichtung (10a; 10b) magnetisch in der Schweißposition gehalten wird.

9. Verfahren nach Anspruch 8, **dadurch gekennzeichnet, dass** in zumindest einem Verfahrensschritt (30a; 30b) das Verpackungsmaterial (14a; 14b) zwischen dem Amboss (16a; 16b) und dem Fixiermagnetelement (24a; 24b) der Magneteinheit (22a; 22b) angeordnet wird.

10. Verfahren nach Anspruch 8 oder 9, **dadurch gekennzeichnet, dass** in zumindest einem Verfahrensschritt (32a; 32b) der Schweißstempel (20a; 20b) relativ zur Magneteinheit (22a; 22b) bewegt wird.

11. Verfahren nach einem der Ansprüche 8 bis 10, **dadurch gekennzeichnet, dass** in zumindest einem Verfahrensschritt (34b) eine zusammenhängende Bahn von Auslasselementen (12b) durch ein Zusammenwirken der Magneteinheit (22b) mit dem Amboss (16b) durchtrennt wird.

12. Verfahren nach einem der Ansprüche 8 bis 11, **dadurch gekennzeichnet, dass** in zumindest einem Verfahrensschritt (36b) eine Perforation in das Verpackungsmaterial (14b) eingebracht wird.

13. Verpackungsmaschine (38a; 38b) zum Herstellen von Verpackungen aus einem Verpackungsmaterial (14a; 14b) mit einem Auslasselement (12a; 12b) mit einer Schweißvorrichtung (10a; 10b) nach einem der Ansprüche 1 bis 7.
